# EUROPEAN PATENT SPECIFICATION

(11) **EP 1 979 255 B1**
(45) Date of publication and mention of the grant of the patent: **11.07.2012**
(21) Application number: 07705015.1
(22) Date of filing: 24.01.2007
(51) Int. Cl.: B65G 47/244, B65G 17/24

(54) **ARTICLE-ROTATING AND CENTERING CONVEYOR**
ARTIKELDREH- UND -ZENTRIERFÖRDERER
TRANSPORTEUR PERMETTANT LA ROTATION ET LE CENTRAGE D'ARTICLES

(30) Priority: 25.01.2006 GB 0601527
(43) Date of publication of application: 15.10.2008
(73) Proprietor: R.J. Herbert Engineering Limited, Marshland St James Wisbech Cambridgeshire PE14 8JT (GB)
(72) Inventor: DOWE, Andrew, William, Kings Lynnn PE34 4RG (GB)
(74) Representative: ip21 Ltd
(86) International application number: PCT/GB2007/000240
(87) International publication number: WO 2007/085825

(56) References cited:
- EP-A1- 1 367 009
- WO-A-2006/096292
- US-A- 6 164 431
- US-A1- 2005 072 656

## Description

### Field of the Invention

This invention relates to conveyor apparatus, such as apparatus comprising conveyor belts.

### Background to the Invention

Conveyor belts are well-known for use in the automatic or semi-automatic transport of objects. In particular, conveyor belts are used widely in airports for baggage handling. There is an increasing requirement for airline baggage to be x-rayed in order to identify explosives or other prohibited material in the baggage. However, this causes a problem in baggage handling as the suitcases and bags must be correctly orientated and centralised in order to pass through the, relatively narrow, x-ray machine. To date, baggage for x-ray has been orientated by hand, for example on a ball-race table, but such a process is slow and labour intensive.

The present invention, at least in its preferred embodiments, seeks to provide a conveyor that can be used to orientate and centralise objects such as baggage, preferably automatically.

EP 1 367 009 A1 (LAITRAM L L C) discloses a singulating conveyor for aligning a mass of conveyed articles into single file, in which two endless conveyor belts are arranged in parallel, with each conveyor belt having an upper surface comprising a plurality of belt rollers, each belt roller arranged to rotate with movement of the conveyor belts about an axis at an oblique angle to the longitudinal direction of the conveyor belts. This known apparatus further comprises a respective drive mechanism arranged to drive each conveyor belt. The axes of the belt rollers are aligned such that when each conveyor belt is driven in the forward direction the belt rollers of the conveyor belt rotate about their axes to urge an object on the upper surface of the conveyor belt towards the other conveyor belt.

### Summary of the Invention

With the conveyor apparatus according to the invention, each drive mechanism is arranged to drive the associated conveyor belt selectively in a forward direction and a reverse direction independently of the direction of drive of the other conveyor belt. Objects on the conveyor belts can thus be centrally aligned on the apparatus by the action of the belt rollers in driving the object towards the interface of the two conveyor belts. Furthermore, the objects can be rotated on the conveyor apparatus by stopping one conveyor belt or driving the conveyor belts in opposite directions. In this way the conveyor apparatus can be used to correctly orientate objects, such as suitcases, on the conveyor apparatus so that they will pass through a defined opening, such as the entry opening of an x-ray machine.

In general, the belt rollers of each conveyor belt rotate to urge an object on the upper surface of the conveyor belt away from the other conveyor belt when the conveyor belt is driven in the reverse direction. However, if this is to be prevented, the belt rollers may be filled with a ratchet mechanism, for example.

In the preferred embodiment, the belt rollers of each conveyor belt are arranged in longitudinal columns. The belt rollers may also be arranged in transverse rows or the belt rollers in adjacent columns may be staggered with respect to each other. A connecting roller may be mounted for free rotation about a longitudinal axis below each column of rollers, with the connecting roller in frictional engagement with a lower surface of each of the rollers of the column. In this way, longitudinal movement of the conveyor bclt relative to the connecting roller causes rotation of the belt rollers about their axes.

In the preferred embodiment, each drive mechanism comprises respective end sprockets at the two longitudinal extremities of the upper surface of the conveyor belt and a drive sprocket arranged between the end sprockets and spaced therefrom. Up to five end sprockets may be located at each end of the conveyor belt. In a conventional conveyor arrangement, the conveyor belt extends between a drive sprocket and an idler (end) sprocket. However, if the direction of drive is reversed in such a conventional arrangement, slack in the belt can cause the belt to disengage from the drive sprocket. In the preferred embodiment, disengagement of the belt is prevented because the drive sprocket is spaced from each of the end sprockets, such that the section of belt between the drive sprocket and each end sprocket can take up any slack generated by the reversal of the direction of drive.

In general, each sprocket engages an inner surface of the conveyor belt. However, it would be possible to provide a conveyor apparatus according to the invention in which the drive sprocket engages the outer surface of the conveyor belt, if desired.

Each drive mechanism may further comprise two tensioning rollers, each arranged between the drive sprocket and a respective end sprocket. The tensioning rollers may be resiliently biased against the conveyor belt. However, it has been found that the tensioning rollers function acceptably without resilient biasing, for example where the tensioning rollers are adjustably positionable.

The tensioning rollers may engage an outer surface of the conveyor belt. In the preferred embodiment, the outer surface of the tensioning rollers is formed of rubber or elastomer. This has been found to reduce any noise generated by the engagement of the tensioning rollers with the moving belt.

In the preferred embodiment, the upper surface of each tensioning roller is higher, in the position of use, than the rotational axis of the drive roller. In this way, the tensioning rollers can guide the belt around the drive sprocket in order to ensure maximum engagement between the drive sprocket and the belt.

Each tensioning roller may be spaced from its adjacent end sprocket by a distance sufficient to accommodate slack in the conveyor belt due to a change in the drive direction of the conveyor belt. In this case, disengagement of the belt as explained above is prevented because the tensioning rollers are spaced from the end sprockets, such that the section of belt between the tensioning rollers and each end sprocket can take up any slack generated by the reversal of the direction of drive.

Each drive mechanism may be capable of driving the respective conveyor belt at variable speed. In this way, the orientation of an object on the conveyor apparatus can be altered by running the two conveyor belts at different speeds (in the same direction).

The drive mechanisms of the conveyor apparatus may be controlled manually by an operator to orientate the objects on the conveyor apparatus. Preferably, though, the conveyor apparatus further comprises a sensor arrangement configured to generate data indicative of the size and orientation of an object on the conveyor apparatus and a data processor configured to control the drive mechanisms of the conveyor belts to achieve a desired orientation of the object on the conveyor apparatus. Thus, the sensor arrangement may be configured to generate sufficient spatial information about the object on the conveyor apparatus that the data processor can re-orientate the object by controlling the relative speeds and directions of movement of the conveyor belts. In this way, objects on the conveyor apparatus may be orientated automatically, for example to pass through a defmed entry opening.

A suitable sensor device may include a camera, a video camera or other imaging device arranged to image the upper surface of the conveyor belts. However, it has been found difficult to achieve the required contrast and accuracy using a camera. Preferably, therefore, the sensor arrangement comprises a laser distance measuring device, as this has been found to provide simple and accurate spatial information about objects on the conveyor apparatus. The apparatus may comprise a plurality of distance measuring devices distributed longitudinally along the longitudinal direction of the conveyor apparatus. The sensor arrangement may comprise at least two distance measuring devices arranged on opposite sides of the conveyor apparatus, each arranged to determine a respective distance to an object on the conveyor apparatus. In this way, the transverse position and the effective width of the object on the conveyor apparatus can be determined.

The data processor may be configured to orientate objects on the conveyor belts by varying the speed and/or direction of the conveyor belts. In the preferred embodiment, the data processor is configured to control the drive mechanisms to drive the conveyor belts in opposite directions to rotate an object on the conveyor apparatus. In this way the conveyor apparatus can automatically turn an object that will not fit through a defined opening in one orientation into an orientation in which the object will fit.

Although the invention has been described in the context of baggage handling, the invention is of application in other fields, such as production lines, packaging lines, distribution lines and the like.

### Brief Description of the Drawings

An embodiment of the invention will now be described by way of example only and with reference to the accompanying drawings, in which:
Figure 1 is a perspective view from above of a conveyor according to an embodiment of the invention;
Figure 2 is an end elevation of the conveyor of Figure 1;
Figure 3 is a side elevation of the conveyor of Figure 1 illustrating the drive mechanism;
and
Figure 4 is a side elevation of an end sprocket of the conveyor of Figure 1.

### Detailed Description of an Embodiment

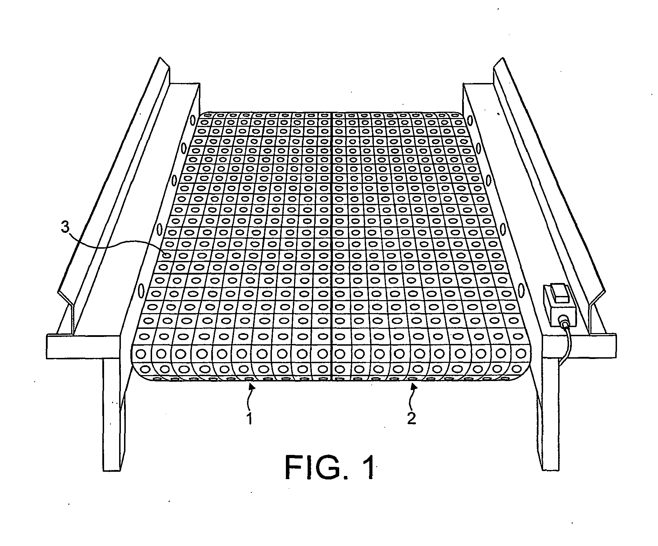

With reference to Figure 1, a conveyor according to an embodiment of the invention comprises two parallel belts 1, 2 arranged for movement in the longitudinal direction of the conveyor. The belts 1, 2 are modular plastics belts of the type available from INTRALOX, L.L.C. of Harahan, Louisiana, USA. Each belt 1, 2 comprises a plurality of belt rollers 3 arranged in transverse rows and longitudinal columns and rotatably mounted in the belt 1, 2 for independent rotation about a respective axis at 45 degrees to the longitudinal direction of the conveyor. In each belt 1, 2 the rotational axes of the belt rollers 3 of that belt 1, 2 are aligned in parallel and the axes of the belt rollers 3 of the first belt 1 are at 90 degrees to the axes of the belt rollers 3 of the second belt 2.

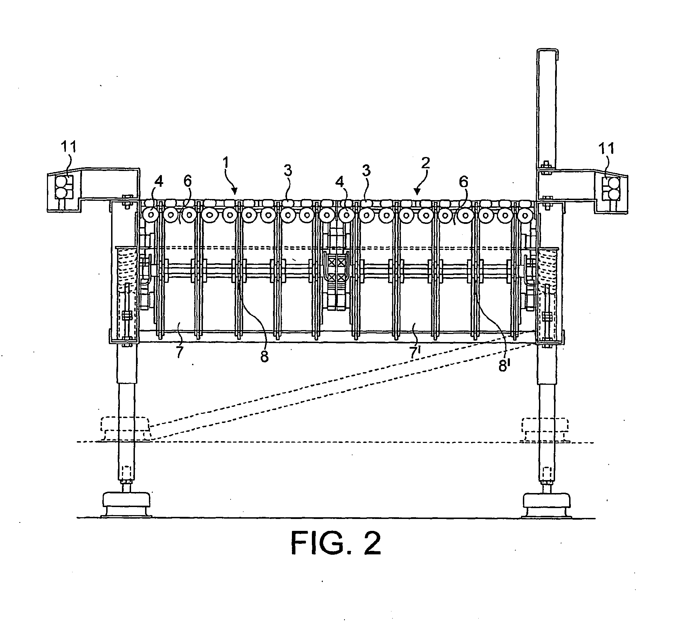

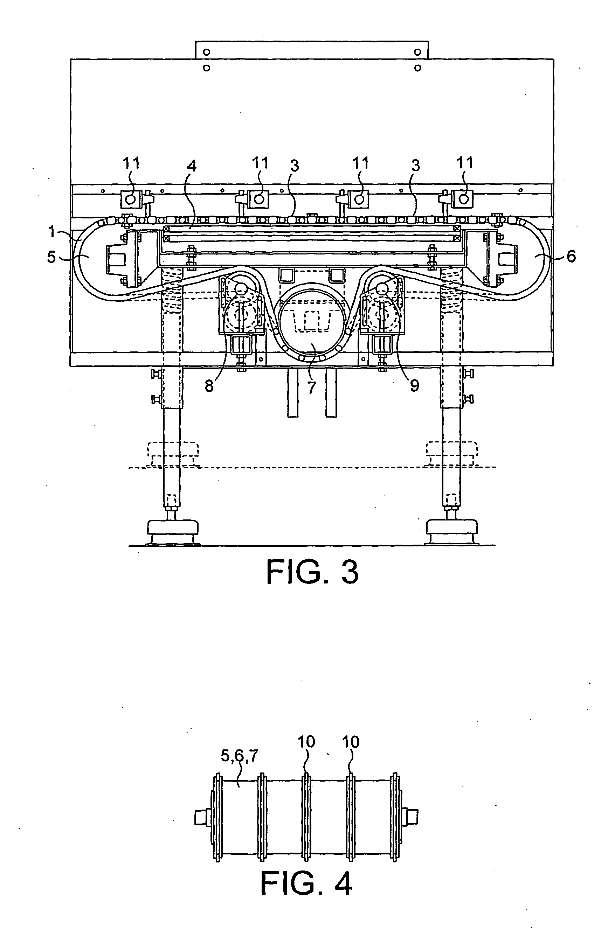

As shown in Figures 2 and 3, connecting rollers 4 are provided below the belt rollers 3 of each belt 1, 2. The connecting rollers 4 are arranged in parallel in the longitudinal direction of the conveyor and each connecting roller 4 frictionally engages a respective column of belt rollers 3 as the belt rollers 3 pass over the upper surface of the conveyor. The connecting rollers 4 are each mounted for free rotation about an axis parallel to the longitudinal direction of the conveyor. The frictional engagement between the belt rollers 3 and the connecting rollers 4 is such that as the belts 1, 2 are driven over the upper surface of the conveyor, the belt rollers 3 rotate about their oblique axes thereby rotating the connecting rollers 4 about their longitudinal axes. In this way, as the belts 1, 2 are driven round, the belt rollers 3 rotate about their axes.

The uppermost surfaces of the belt rollers 3 project above the upper surface of the belts 1, 2 a small distance, such that they engage the lower surface of an object, such as a suitcase, placed on the conveyor. Thus, as the belts 1, 2 are driven over the upper surface of the conveyor, the rotation of the belt rollers 3 acts to propel the object in a direction perpendicular to the axes of rotation of the belt rollers 3. Because the axes of rotation of the belt rollers 3 are oblique to the longitudinal direction of the conveyor, the direction of propulsion of the object has components in both the longitudinal and transverse directions of the conveyor. Furthermore, because the axes of the belt rollers 3 of the first belt 1 are at 90 degrees to the axes of the belt rollers 3 of the second belt 2, the transverse component of propulsion due to the first belt 1 is in the opposite direction to the transverse component of propulsion due to the second belt 2. With both belts 1, 2 moving together in the forward longitudinal direction of the conveyor, the belt rollers 3 of each belt propel the object towards the centre line of the conveyor where the two belts 1, 2 meet, as well as propelling the object forwards. In this way, an object placed on the start of the conveyor in a position that is transversely off-centre, is driven towards the centre line of the conveyor as it progresses longitudinally. This centring effect is a particular advantage of the opposed, obliquely orientated belt rollers 3.

The drive mechanism for the conveyor is shown in Figure 3. Figure 3 shows the drive mechanism for the first belt 1 and only this will be described in detail. The drive mechanism for the second belt 2 is identical to that for the first belt 1.

The drive mechanism comprises two end sprockets 5, 6 over which the belt 1 passes at respective ends of the conveyor. The end sprockets 5, 6 are provided with teeth which engage complimentary formations on the inner surface of the belt 1, to ensure accurate location of the belt 1 on the end sprockets 5, 6. Up to five rows of teeth may be provided in the embodiment shown. The end sprockets 5, 6 are each mounted for free rotation about a respective transverse axis. Between and below the end sprockets 5, 6, the belt 1 passes under a drive sprocket 7, which is also toothed to engage the complimentary formations in the belt 1. The drive sprocket 7 is rotated by a drive mechanism (not shown) about a transverse axis to drive the belt 1 round. Between each end sprocket 5, 6 and the drive sprocket 7, respective tensioning rollers 8, 9 bear against the outer surface of the belt 1 to take up slack in the belt 1. As indicated in Figure 3, the vertical position of the tensioning rollers 8, 9 can be adjusted to vary the tension of the belt 1 on each side of the drive sprocket 7. The surface of the tensioning rollers 8, 9 engaging the belt is provided by a rubber or elastomer ring, which assists in ensuring quiet operation of the conveyor.

As shown in Figure 3, a portion of the belt 1 extends between each tensioning roller 8, 9 and each end sprocket 5, 6. This portion of the belt 1 can be arranged, by adjustment of the vertical position of the appropriate tensioning roller 8, 9 to sag at least slightly. This is important in that it allows the direction of transport of the belt 1 to be reversed without slack passing over the end sprockets 5, 6 and affecting the smooth running of the upper surface of the belt 1. By arranging the drive mechanism in this way, each belt 1, 2 of the conveyor can be driven both forwards and backwards, which has particular advantages in orientating objects on the conveyor, as will be described below. The provision of slack in the drive mechanism also reduces the wear on the drive mechanism compared to a tensioned system, as well as allowing the use of smaller motors and therefore less energy.

Figure 2 shows the end view of the conveyor with one end sprocket 5 removed for clarity. The reference numerals of the components of the drive mechanism for the second belt 2 are indicated with a prime. Thus, it can be seen that the end sprocket 6, the drive sprocket 7 and the tensioning roller 8 are mounted for rotation at the centre of the conveyor and at one edge. The general form of the end sprockets 5, 6 and the drive sprocket 7 is shown in Figure 4, which also shows the rows of teeth 10 of the sprockets 5, 6, 7.

As explained above, with the drive mechanism of this embodiment, the belts 1, 2 can each be driven forwards and backwards. This allows great flexibility in orientating an object on the conveyor. As has previously been explained, when both belts 1, 2 are driven forwards at the same speed, the belt rollers 3 urge an object on the conveyor towards the centre of the conveyor as it moves forward. If the first belt 1 is driven forwards more quickly than the second belt 2, or vice versa, the object will be rotated as it progresses along the conveyor. Indeed, one belt may be stopped to achieve rotation of the object. However, if both belts 1, 2 can be kept moving, throughput along the conveyor is more rapid, while still achieving rotation. Advantageously, if very significant rotation of the object is required, the belts 1, 2 may be driven in opposite directions. It will be apparent that in this way, the orientation of an object on the belt can be corrected by controlling the relative speed and direction of the belts 1, 2. In this way, the conveyor of this embodiment may be used very efficiently, for example, to orientate suitcases as they enter an x-ray machine in order that the suitcases pass smoothly through the machine.

The conveyor of this embodiment includes a system to automatically centre and orientate objects on the conveyor so that the objects, for example suitcases, will pass through a defined gap at the end of the conveyor. In this example, the conveyor has a length of 1200 mm and a width of 1500 mm. The combined width of the belts 1, 2 is 1035 mm. A typical x-ray machine has an entry opening of width 700 mm or 750 mm.

The conveyor is provided with eight laser distance sensors 11, of the type available from IFM EFECTOR INC. of Exton, PA, USA. The distance sensors 11 output a distance reading to an object in their path by directing a laser beam at the object and receiving reflected laser light at a detector mounted on the sensor 11. The time of flight of the laser beam is used to calculate the distance to the object. For this reason, as shown in Figure 2, the sensors 11 are positioned outwardly of the outer edges of the belts 1, 2 in order to accommodate the minimum measurable distance of the sensors 11. In an alternative arrangement, the upwardly-directed sensors 11 may be located below the level of the upper surface of the conveyor and angled mirrors may be provided at the level of the upper surface of the conveyor to direct the laser light from the sensors across the conveyor.

Four distance sensors 11 are distributed longitudinally along each side of the conveyor in order to measure the position and width of an object on the conveyor. The sensors 11 are arranged in four opposing pairs, with each sensor 11 tilted slightly so that its laser does not impinge on the detector of the opposing sensor 11. The arrangement of opposing sensors 11 allows both the position and width of an object on the conveyor to be calculated. The output from successive sensors 11 also provides an indication of the orientation of the object. The distance data from the sensors can be used to control the direction and speed of movement of the belts 1, 2 in order to correctly orientate an object for passage through an entry opening at the end of the conveyor.

The direction and speed of movement of the belts 1, 2 is controlled by a suitable programmable logic controller, for example of the type available from Siemens AG of Munich, Germany or Telemac Corporation of Los Angeles, California, USA. A particular control system is based on the Modicon Micro PLC using a TSX-3721 processor.

If the total distance between an opposed pair of sensors 11 is D and the sensors measure respective distances d₁ and d₂ to an object on the conveyor, the width w of the object between the sensors is given by the expression w = D - d₁ - d₂. The distance d₁ represents the width of belt 1 not occupied by the object and the distance d₂ represents the width of belt 2 not occupied by the object. Assuming that the conveyor is positioned to direct the object through an entry opening of width W that is centrally located across the conveyor, the condition w < W must be satisfied. However, the object must not only be of a small enough width, but must also be centrally positioned on the conveyor. Thus, the conditions d₁ > dₘᵢₙ and d₂ > dₘᵢₙ, where dₘᵢₙ = (D - W)/2 must also be satisfied by the time the object reaches the entry opening.

The distance of travel of the belts 1, 2 can also be used in combination with the distance data from the sensors 11 to determine the shape and orientation of the object. The distance of travel can be calculated from the speed of the motor driving the drive sprocket 7 and a measurement of time.

In most circumstances, such as baggage handling, it can be assumed that an object on the conveyor has a generally rectangular cross-section in the plane of the upper surface of the conveyor, or that the object at least has parallel sides. Assuming an object of width a and length b with parallel sides is moving along the conveyor past the pair of sensors 11, with each sensor 11 measuring the respective distance d₁, d₂ to a respective side of the object, the angle θ between the side of the object and the forward direction of the conveyor (measured in the direction from belt 1 to belt 2) is given by the expression tan θ = Δd₁ / Δs = Δd₂ / Δs, where Δd₁ and Δd₂ are the changes in d₁ and d₂ as the conveyor moves the object a longitudinal distance Δs, assuming that any lateral translation of the object can be ignored. If Δd₁ / Δs ≠ Δd₂ / Δs, it is apparent that the sensors 11 are not both measuring parallel sides of the object. By determining the angle θ, the width a of the object can be calculated from the expression a = w cos θ.

In the absence of an object between the sensors, w = -D, because both sensors measure a distance D to the opposite side of the conveyor. The length b of a rectangular object can be calculated from the distance s travelled by the conveyor from the first time that w≠ -D (the object first intercepts the line of the sensors) to the time that w = -D again (the object exits the line of the sensors). The length b of the object can be calculated from the expression s = a |sin θ| + b cos θ.

| **Condition A** | d₁ > dₘᵢₙ | d₁ < dₘᵢₙ |
|---|---|---|
| d₂ > dₘᵢₙ | Move both belts forward at full speed | Slow belt 2 to move object towards belt 1 |
| d₂ < dₘᵢₙ | Slow belt 1 to move object towards belt 2 | Determine actual width a and angle of orientation and apply Condition B |

With the information from the sensors 11, an object, such as a suitcase can be orientated automatically on the conveyor to pass through the entry opening. The initial processing of the object on the conveyor is summarised as Condition A in the table above.

If the position and orientation of the object on the conveyor are such that d₁ > dₘᵢₙ and d₂ > dₘᵢₙ, for the entire journey of the object on the conveyor, the object will pass successfully through the entry opening and no re-orientation is required. Thus, both belts 1, 2 can proceed at full speed while this condition is met for all sensors 11. If the object is located off-centre and is of such a width that either d₁ < dₘᵢₙ or d₂ < dₘᵢₙ, the belt onto which the object should be shifted is slowed, so that the other belt pushes the object towards the slower belt. If this achieves the condition that d₁ > dₘᵢₙ and d₂ > dₘᵢₙ for all sensors 11, both belts 1, 2 can proceed at full speed again. However, if the shifting of the object across the conveyor results in the condition that d₁ < dₘᵢₙ and d₂ < dₘᵢₙ, the width and orientation of the object must be evaluated in order to consider whether the object can be re-orientated. The further processing of the object in this case is summarised as Condition B in the table below.

| **Condition B** | a<W | a>W |
|---|---|---|
| θ>0 | Reverse belt 1 and move belt 2 forward to rotate object clockwise until w = a and apply condition A | Determine actual length b and apply Condition C |
| θ<0 | Reverse belt 2 and move belt 1 forward to rotate object anti-clockwise until w = a and apply condition A | |

If the actual width a of the object is determined to be less than the width W of the entry opening, the object can be rotated to pass through the entry opening. In this case, the angle θ between the side of the object and the forward direction of the conveyor (measured in the direction from belt 1 to belt 2) is determined. If the angle θ is positive (a side of length b forms an angle of less than 45° with the forward direction of the conveyor), the object must be rotated clockwise (the direction moving from belt 2 towards belt 1 at the forward end of the object). To achieve this, belt 1 is reversed and belt 2 is moved forward until the sides of the object are aligned with the forward direction of the conveyor, i.e. the actual width a of the object is equal to the width w measured by the sensors and the angle θ is reduced to zero. Once this is achieved, Condition A can be applied to effect any necessary lateral shift of the object.

Similarly, if the angle θ is negative (a side of length a forms an angle of greater than 45° with the forward direction of the conveyor), the object must be rotated anti-clockwise (the direction moving from belt 1 towards belt 2 at the forward end of the object). To achieve this, belt 2 is reversed and belt 1 is moved forward until the sides of the object are aligned with the forward direction of the conveyor, i.e. the actual width a of the object is equal to the width w measured by the sensors and the angle θ is reduced to zero. Once this is achieved, Condition A can be applied to effect any necessary lateral shift of the object.

If the width a of the object is greater than the width W of the entry opening, the length b of the object must be evaluated in order to consider whether the object can be re-orientated. The further processing of the object in this case is summarised as Condition C in the table below.

| **Condition C** | b<W | b>W |
|---|---|---|
| θ>0 | Reverse belt 2 and move belt 1 forward to rotate object anti-clockwise until w = b and apply condition A | Reject the object as oversized |
| θ<0 | Reverse belt 1 and move belt 2 forward to rotate object clockwise until w = b and apply condition A | |

If the actual length b of the object is determined to be less than the width W of the entry opening, the object can be rotated to pass through the entry opening. If the angle θ is positive, the object must be rotated anti-clockwise (the direction moving from belt 1 towards belt 2 at the forward end of the object). To achieve this, belt 2 is reversed and belt 1 is moved forward until the sides of the object are aligned with the forward direction of the conveyor, i.e. the actual length b of the object is equal to the width w measured by the sensors and the angle θ is increased to 90°. Once this is achieved, Condition A can be applied to effect any necessary lateral shift of the object.

Similarly, if the angle θ is negative, the object must be rotated clockwise (the direction moving from belt 2 towards belt 1 at the forward end of the object). To achieve this, belt 1 is reversed and belt 2 is moved forward until the sides of the object are aligned with the forward direction of the conveyor, i.e. the actual length b of the object is equal to the width w measured by the sensors and the angle 0 is reduced to -90°. Once this is achieved, Condition A can be applied to effect any necessary lateral shift of the object.

If both the width a and the length b of the object are larger than the width of the entry opening, the object is rejected as oversized, for example by sounding an alarm to the operator of the conveyor.

The four pairs of sensors 11 all operate according to the principles set out above, but by distributing the sensors 11 longitudinally along the conveyor greater accuracy can be achieved by using data from multiple sensors to determine the position and orientation of the object on the conveyor. Furthermore, the use of multiple sensors allows some redundancy in the event of a sensor failure.

In general operation, a bag is allowed to enter the conveyor and the two belts 1, 2 start up. How far over to one side the bag is decides which belt runs and which is stopped. Once the bag reaches the second pair of sensors 11 then one of the belts will stop. At any stage in the operation should the bag be seen as aligned it is flagged to leave the conveyor and both belts 1, 2 start at a high speed to remove the bag. Also if the bag appears to be stuck then the belt that is not running will be started at a very slow speed to get the bag moving. If the bag reaches the end of the conveyor and is not straight then one belt will reverse at high speed and one continue forward at very slow speed to try to align the bag. If it then reaches the first sensor pair then the case will move forward as before. Should a bag take too long to align then an alarm will be triggered and the conveyor will be stopped.

In summary, a conveyor comprises two endless conveyor belts arranged in parallel. The upper surface of each conveyor belt includes an array of belt rollers, each belt roller arranged to rotate with movement of the conveyor belts about an axis at an oblique angle to the longitudinal direction of the conveyor belts. The conveyor also includes a respective drive mechanism arranged to drive each conveyor belt. Each drive mechanism is arranged to drive the associated conveyor belt selectively in a forward direction and a reverse direction independently of the direction of drive of the other conveyor belt. The axes of the belt rollers are aligned such that when each conveyor belt is driven in the forward direction, the belt rollers of the conveyor belt rotate about their axes to urge an object on the upper surface of the conveyor belt towards the other conveyor belt. The conveyor has the advantage that an object on the upper surface of the conveyor belts can be re-orientating by moving the conveyor belts in opposing direction and/or at different speeds, in order that the object will pass through a defined opening at the end of the conveyor.

Although the conveyor apparatus of this embodiment has been described in the context of the transportation of suitcases through an x-ray machine, there are many other applications for the conveyor. These include, but are not limited to: orientating objects longitudinally on a conveyor prior to an inclined conveyor in order to prevent the objects rolling around at the transition between a flat conveyor and an inclined conveyor; and orientating a series of objects into the same orientation, for example to align respective bar codes, radio frequency identification tags or other identification marks in the same position on each object.

## Claims

1. Conveyor apparatus comprising:
two endless conveyor belts (1, 2) arranged in parallel, with each conveyor belt (1, 2) having an upper surface comprising a plurality of belt rollers (3), each belt roller (3) arranged to rotate with movement of the conveyor belts (1, 2) about an axis at an oblique angle to the longitudinal direction of the conveyor belts (1, 2); and
a respective drive mechanism arranged to drive each conveyor belt, the axes of the belt rollers (3) being aligned such that when each conveyor belt (1, 2) is driven in the forward direction the belt rollers (3) of the conveyor belt (1, 2) rotate about their axes to urge an object on the upper surface of the conveyor belt (1) towards the other conveyor belt (2);
**characterised in that** each drive mechanism is arranged to drive the associated conveyor belt (1) selectively in a forward direction and a reverse direction independently of the direction of drive of the other conveyor belt (2).

2. Conveyor apparatus as claimed in claim 1, **characterised in that** the belt rollers (3) of each conveyor belt (1, 2) rotate to urge an object on the upper surface of the conveyor belt (1) away from the other conveyor belt (2) when the conveyor belt (1) is driven in the reverse direction.

3. Conveyor apparatus as claimed in claim 1 or 2, **characterised in that** the belt rollers (3) of each conveyor belt (1,2) are arranged in longitudinal columns and a connecting roller (4) is mounted for free rotation about a longitudinal axis below each column of rollers, with the connecting roller (4) in frictional engagement with a lower surface of each of the rollers of the column, such that longitudinal movement of the conveyor belt (1,2) relative to the connecting roller (4) causes rotation of the belt rollers (3) about their axes.

4. Conveyor apparatus as claimed in any preceding claim, **characterised in that** each drive mechanism comprises two end sprockets (5, 6) at the longitudinal extremities of the upper surface of the conveyor belt (1, 2) and a drive sprocket (7) arranged between the end sprockets (5, 6) and spaced therefrom.

5. Conveyor apparatus as claimed in claim 4, **characterised in that** each sprocket engages (5, 6) an inner surface of the conveyor belt (1, 2).

6. Conveyor apparatus as claimed in claim 4 or 5, **characterised in that** each drive mechanism further comprises two tensioning rollers (8, 9), each arranged between the drive sprocket (7) and a respective end sprocket (5,6) and engaging an outer surface of the conveyor belt (1, 2), the upper surface of each tensioning roller (8, 9) being higher, in the position of use, than the rotational axis of the drive roller.

7. Conveyor apparatus as claimed in claim 6, **characterised in that** each tensioning rollers (8, 9) is spaced from its adjacent end sprocket (5, 6) by a distance sufficient to accommodate slack in the conveyor belt (1, 2) due to a change in the drive direction of the conveyor belt (1, 2).

8. Conveyor apparatus as claimed in any preceding claim, **characterised in that** each drive mechanism is capable of driving the respective conveyor belt (1, 2) at variable speed.

9. Conveyor apparatus as claimed in any preceding claim further comprising:
a sensor arrangement (11) configured to generate data indicative of the size and orientation of an object on the conveyor apparatus; and
a data processor configured to control the drive mechanisms of the conveyor belts to achieve a desired orientation of the object on the conveyor apparatus.

10. Conveyor apparatus as claimed in claim 9, **characterised in that** the sensor arrangement comprises a laser distance measuring device (11).

11. Conveyor apparatus as claimed in claim 9 or 10, **characterised in that** the sensor arrangement (11) comprises at least two distance measuring devices arranged on opposite sides of the conveyor apparatus, each arranged to determine a respective distance to an object on the conveyor apparatus.

12. Conveyor apparatus as claimed in claim 9, 10 or 11, **characterised in that** the data processor is configured to control the drive mechanisms to drive the conveyor belts (1, 2) in opposite directions to rotate an object on the conveyor apparatus.

## Patentansprüche

1. Fördergerät, umfassend:
zwei parallel angeordnete Endlos-Förderbänder (1, 2), wobei jedes Förderband (1, 2) eine Oberseite hat, die eine Vielzahl von Bandrollen (3) umfasst, wobei jede Bandrolle (3) so angeordnet ist, dass sie sich mit der Bewegung der Förderbänder (1, 2) um eine Achse in einem Winkel schräg zur Längsrichtung der Förderbänder (1, 2) dreht; und
einen jeweiligen Antriebsmechanismus, der so angeordnet ist, dass er jedes Förderband antreibt, wobei die Achsen der Bandrollen (3) so ausgerichtet sind, dass, wenn jedes Förderband (1, 2) in der Vorwärtsrichtung angetrieben wird, sich die Bandrollen (3) des Förderbands (1, 2) um ihre Achsen drehen, um ein auf der Oberseite des Förderbands (1) befindliches Objekt in Richtung des anderen Förderbands (2) zu drängen;
**dadurch gekennzeichnet, dass** jeder Antriebsmechanismus so angeordnet ist, dass er das zugehörige Förderband (1) unabhängig von der Antriebsrichtung des anderen Förderbands (2) wahlweise in einer Vorwärtsrichtung und einer umgekehrten Richtung antreibt.

2. Fördergerät gemäß Anspruch 1, **dadurch gekennzeichnet, dass** sich die Bandrollen (3) von jedem Förderband (1, 2) drehen, um ein auf der Oberseite des Förderbands (1) befindliches Objekt von dem anderen Förderband (2) wegzudrängen, wenn das Förderband (1) in der umgekehrten Richtung angetrieben wird.

3. Fördergerät gemäß Anspruch 1 oder 2, **dadurch gekennzeichnet, dass** die Bandrollen (3) jedes Förderbands (1, 2) in Längsreihen angeordnet sind und unter jeder Rollenreihe eine Verbindungsrolle (4) zur ungehinderten Drehung um eine Längsachse montiert ist, wobei die Verbindungsrolle (4) Reibschluss mit einer Unterseite von jeder der Rollen in der Reihe hat, so dass die Längsbewegung des Förderbands (1, 2) im Verhältnis zur Verbindungsrolle (4) die Drehung der Bandrollen (3) um ihre Achsen bewirkt.

4. Fördergerät gemäß einem der vorherigen Ansprüche, **dadurch gekennzeichnet, dass** jeder Antriebsmechanismus zwei Endkettenräder (5, 6) an den äußersten Längsenden der Oberseite des Förderbands (1, 2) sowie ein Antriebskettenrad (7) umfasst, das zwischen den Endkettenrädern (5, 6) angeordnet ist und einen Abstand zu diesen aufweist.

5. Fördergerät gemäß Anspruch 4, **dadurch gekennzeichnet, dass** jedes Kettenrad (5, 6) in eine Innenseite des Förderbands (1, 2) eingreift.

6. Fördergerät gemäß Anspruch 4 oder 5, **dadurch gekennzeichnet, dass** jeder Antriebsmechanismus des Weiteren zwei Spannrollen (8, 9) umfasst, die jeweils zwischen dem Antriebskettenrad (7) und einem jeweiligen Endkettenrad (5,6) angeordnet sind und in eine Außenseite des Förderbands (1, 2) eingreifen, wobei die Oberseite von jeder Spannrolle (8, 9) in der Arbeitsposition höher angeordnet ist als die Drehachse der Antriebsrolle.

7. Fördergerät gemäß Anspruch 6, **dadurch gekennzeichnet, dass** jede der Spannrollen (8, 9) mit einem Abstand zu ihrem benachbarten Endkettenrad (5, 6) angeordnet ist, der ausreicht, um den Schlupf im Förderband (1, 2) infolge einer Änderung der Antriebsrichtung des Förderbands (1, 2) aufzufangen.

8. Fördergerät gemäß einem der vorherigen Ansprüche, **dadurch gekennzeichnet, dass** jeder Antriebsmechanismus in der Lage ist, das jeweilige Förderband (1 ,2) mit variabler Geschwindigkeit anzutreiben.

9. Fördergerät gemäß einem der vorherigen Ansprüche, des Weiteren umfassend:
eine Sensoranordnung (11), die dafür konfiguriert ist, Daten zu erzeugen, die Auskunft über Größe und Ausrichtung eines auf dem Fördergerät befindlichen Objekts geben; and
einen Datenprozessor, der dafür konfiguriert ist, die Antriebsmechanismen der Förderbänder so zu steuern, dass eine gewünschte Ausrichtung des auf dem Fördergerät befindlichen Objekts erzielt wird.

10. Fördergerät gemäß Anspruch 9, **dadurch gekennzeichnet, dass** die Sensoranordnung eine lasergestützte Abstandsmessvorrichtung (11) umfasst.

11. Fördergerät gemäß Anspruch 9 oder 10, **dadurch gekennzeichnet, dass** die Sensoranordnung (11) mindestens zwei Abstandsmessvorrichtungen umfasst, die auf gegenüberliegenden Seiten des Fördergeräts angeordnet sind, wobei jede so angeordnet ist, dass sie einen jeweiligen Abstand zu einem auf dem Fördergerät befindlichen Objekt ermittelt.

12. Fördergerät gemäß Anspruch 9, 10 oder 11, **dadurch gekennzeichnet, dass** der Datenprozessor so konfiguriert ist, dass er die Antriebsmechanismen so steuert, dass die Förderbänder (1, 2) in entgegengesetzte Richtungen angetrieben werden, um ein auf dem Fördergerät befindliches Objekt zu drehen.

## Revendications

1. Un appareil formant convoyeur comportant :
deux bandes transporteuses continues (1,2) agencées en parallèle, chaque bande transporteuse (1,2) ayant une surface supérieure comportant une pluralité de rouleaux de bande (3), chaque rouleau de bande (3) agencé pour entrer en rotation avec le déplacement des bandes transporteuses (1,2) sur un axe à un angle oblique par rapport à la direction longitudinale des bandes transporteuses (1, 2) ; et
un mécanisme d'entraînement respectif agencé pour entraîner chaque bande transporteuse, les axes des rouleaux de bande (3) étant alignés de telle sorte que lorsque chaque bande transporteuse (1,2) est entraînée dans la direction avant les rouleaux de bande (3) de la bande transporteuse (1,2) entrent en rotation sur leur axe pour faire avancer un objet sur la surface supérieure de la bande transporteuse (1) vers l'autre bande transporteuse (2) ;
**caractérisé en ce que** chaque mécanisme d'entraînement est agencé pour entraîner la bande transporteuse associée (1) de façon sélective dans une direction avant et une direction arrière indépendamment de la direction d'entraînement de l'autre bande transporteuse (2).

2. Un appareil formant convoyeur tel que revendiqué dans la revendication 1, **caractérisé en ce que** les rouleaux de bande (3) de chaque bande transporteuse (1,2) entrent en rotation pour faire avancer un objet sur la surface supérieure de la bande transporteuse (1) en s'éloignant de l'autre bande transporteuse (2) quand la bande transporteuse (1) est entraînée dans la direction arrière.

3. Un appareil formant convoyeur tel que revendiqué dans la revendication 1 ou la revendication 2, **caractérisé en ce que** les rouleaux de bande (3) de chaque bande transporteuse (1,2) sont agencés en colonnes longitudinales et un rouleau de connexion (4) est monté pour une rotation libre sur un axe longitudinal au-dessous de chaque colonne de rouleaux, le rouleau de connexion (4) étant en prise frictionnelle avec une surface inférieure de chacun des rouleaux de la colonne, de telle sorte que le déplacement longitudinal de la bande transporteuse (1,2) relativement au rouleau de connexion (4) entraîne la rotation des rouleaux de bande (3) sur leurs axes.

4. Un appareil formant convoyeur tel que revendiqué dans n'importe quelle revendication précédente, **caractérisé en ce que** chaque mécanisme d'entraînement comporte deux pignons d'extrémité (5, 6) aux extrémités longitudinales de la surface supérieure de la bande transporteuse (1, 2) et un pignon d'entraînement (7) agencé entre les pignons d'extrémité (5, 6) et espacé de ces derniers.

5. Un appareil formant convoyeur tel que revendiqué dans la revendication 4, **caractérisé en ce que** chaque pignon (5, 6) se met en prise avec une surface interne de la bande transporteuse (1,2).

6. Un appareil formant convoyeur tel que revendiqué dans la revendication 4 ou la revendication 5, **caractérisé en ce que** chaque mécanisme d'entraînement comporte de plus deux rouleaux de tension (8, 9), chacun agencé entre le pignon d'entraînement (7) et un pignon d'extrémité respectif (5, 6) et se mettant en prise avec une surface externe de la bande transporteuse (1,2), la surface externe de chaque rouleau de tension (8, 9) étant plus élevée, dans la position d'utilisation, que l'axe de rotation du rouleau d'entraînement.

7. Un appareil formant convoyeur tel que revendiqué dans la revendication 6, **caractérisé en ce que** chaque rouleau de tension (8, 9) est espacé de son pignon d'extrémité adjacent (5, 6) d'une distance suffisante pour tolérer du mou dans la bande transporteuse (1, 2) en raison d'un changement de direction d'entraînement de la bande transporteuse (1, 2).

8. Un appareil formant convoyeur tel que revendiqué dans n'importe quelle revendication précédente, **caractérisé en ce que** chaque mécanisme d'entraînement est capable d'entraîner la bande transporteuse respective (1, 2) à une vitesse variable.

9. Un appareil formant convoyeur tel que revendiqué dans n'importe quelle revendication précédente comportant de plus :
un agencement de capteurs (11) configuré pour générer des données indicatives de la taille et de l'orientation d'un objet sur l'appareil formant convoyeur ; et
un processeur de données configuré pour commander les mécanismes d'entraînement des bandes transporteuse pour obtenir une orientation souhaitée de l'objet sur l'appareil formant convoyeur.

10. Un appareil formant convoyeur tel que revendiqué dans la revendication 9, **caractérisé en ce que** l'agencement de capteurs comporte un dispositif de mesure de distance laser (11).

11. Un appareil formant convoyeur tel que revendiqué dans la revendication 9 ou la revendication 10, **caractérisé en ce que** l'agencement de capteurs (11) comporte au moins deux dispositifs de mesure de distance agencés sur des côtés opposés de l'appareil formant convoyeur, chacun agencé pour déterminer une distance respective d'un objet sur l'appareil formant convoyeur.

12. Un appareil formant convoyeur tel que revendiqué dans les revendications 9, 10 ou 11, **caractérisé en ce que** le processeur de données est configuré pour commander les mécanismes d'entraînement pour entraîner les bandes transporteuses (1, 2) dans des directions opposées pour faire entrer en rotation un objet sur l'appareil formant convoyeur.
